# EUROPÄISCHE PATENTSCHRIFT

(11) **EP 4 298 369 B1**
(45) Veröffentlichungstag und Bekanntmachung des Hinweises auf die Patenterteilung: **03.12.2025**
(21) Anmeldenummer: 22708510.7
(22) Anmeldetag: 14.02.2022
(51) Int. Cl.: F16N 25/02, F16N 7/38, F16N 21/00

(54) **PROGRESSIVVERTEILER**
PROGRESSIVE DISTRIBUTOR
DISTRIBUTEUR PROGRESSIF

(30) Priorität: 23.02.2021 DE 102021104272
(43) Veröffentlichungstag der Anmeldung: 03.01.2024
(73) Patentinhaber: SKF Lubrication Systems Germany GmbH, 69190 Walldorf (DE)
(72) Erfinder: ZAHN, Dennis, 76689 Karlsdorf-Neuthard (DE); KREUTZKÄMPER, Jürgen, 74915 Waibstadt-Daisbach (DE); SCHÖNFELD, Andreas, verstorben (DE)
(74) Vertreter: Kuhstrebe, Jochen
(86) Internationale Anmeldenummer: PCT/EP2022/053503
(87) Internationale Veröffentlichungsnummer: WO 2022/179874

(56) Entgegenhaltungen:
- CN-A- 107 869 646
- CN-U- 202 012 717
- CN-U- 209 068 149
- US-A- 3 995 717

## Beschreibung

Vorliegende Erfindung betrifft einen Progressivverteiler gemäß dem Oberbegriff von Patentanspruch 1.

Ein Progressivverteiler bzw. ein progressives Schmierstoffsystem dient dazu, ein von einer Pumpe bereitgestelltes Schmiermittel in mehrere Teile aufzuteilen und eine Anzahl von Schmierstellen/Verbrauchern mit Schmiermitteln zu versorgen. Eine wichtige Bauart von Verteilern wird als Blockverteiler bezeichnet. Bei diesem Progressivverteiler bildet ein Stahlblock (Gehäuse) die Basis, der spannend bearbeitet wird und in den Kolben eingesetzt werden, die das Schmiermittel verteilen. Dazu werden Bohrungen in den Gehäuseblock eingebracht, in die die Dosierkolben eingesetzt werden, die wiederum über eine gemeinsame Schmiermitteleinlassbohrung mit Schmiermittel versorgt werden.

Dabei liefert jeder Dosierkolben Schmiermittel über jeweilige Ausgänge an zwei Schmierstellen/Verbraucher. Ferner ist die Menge des Schmiermittels, die von jedem Dosierkolben zugemessen wird, für jeden Dosierkolben gleich und kann nicht variiert werden. Progressivverteiler basieren insbesondere darauf, dass die Dosierkolben nacheinander von einer ersten Position in eine zweite Position verschoben werden, um entweder das Schmiermittel an den Schmiermittelauslass abzugeben oder den Dosierkolben mit entsprechendem Druck zu beaufschlagen, um ihn von einer ersten Position in eine zweite Position zu verschieben. Mit anderen Worten kann sich ein jeweiliger Dosierkolben nur bewegen, wenn sich der in der Reihenfolge der Dosierkolben davor angeordnete Dosierkolben bereits bewegt hat. Aus diesem Grund sind Verbindungsbohrungen vorgesehen, die den letzten Dosierkolben in der Reihenfolge mit dem ersten Dosierkolben verbinden, so dass sich nach dem Bewegen des letzten Dosierkolbens der erste Dosierkolben zurückbewegt.

Die Bauhöhe des Gehäuseblocks des Progressivverteilers ist maßgeblich verantwortlich für die Möglichkeit, den Progressivverteiler verbauen und nutzen zu können. Für die Funktion des Progressivverteilers sind zum einen mehrere Bohrungen in dem Gehäuseblock für Kolbenbohrungen und Schmiermittelauslässe nötig, und zum anderen werden Anschlussmöglichkeiten für Leitungen benötigt, über die das Schmiermittel zu den Verbrauchern geleitet werden kann, so dass die Größe des Gehäuseblocks nicht beliebig verringert werden kann. Auch kann ein Austauschen einer Schmiermittelauslassverbindung durch ein enges Nebeneinanderliegen von Kolbenbohrung und Schmiermittelauslass erschwert werden, da angrenzende Schmiermittelauslassverbindungen unter Umständen entfernt werden müssen. Dies liegt daran, dass aufgrund der Nähe der Schmiermittelauslässe zueinander, eine von anderen Schrauben umgebene Schmiermittelauslassverbindung nicht einfach direkt entfernt werden kann, wodurch ein Wartungsaufwand im Fall einer Störung erhöht wird.

CN 202 012 717 U beschreibt zum Beispiel einen standardmäßigen Progressivverteiler für ein Hochdruckölschmiersystem, der vier rohrleitungsartige Ventilkörper und einen zwischen zwei benachbarten Kolbenmechanismen angeordneten ölversorgenden Bypass umfasst, wobei die Innenräume der Kolbenzylinder der Kolbenmechanismen durch die Kolben mit den Ölauslässen verbunden sind.

Es ist deshalb Aufgabe vorliegender Erfindung, einen Progressivverteiler bereitzustellen, der kompakter gestaltet werden kann und einen einfacheren Austausch einer Schmiermittelauslassverbindung ermöglicht.

Im Folgenden wird ein Progressivverteiler für Schmiermittel mit einem Gehäuseblock vorgeschlagen, wobei der Gehäuseblock eine Schmiermitteleinlassbohrung, über die Schmiermittel in den Progressivverteiler einbringbar ist, und mehrere Schmiermittelauslässe aufweist, über die jeweils eine zugemessene Schmiermittelmenge an einen mit dem jeweiligen Schmiermittelauslass verbundenen Verbraucher abgebbar ist. Zum Abgeben der zugemessene Schmiermittelmenge sind in dem Gehäuse mehrere Dosierkolben vorgesehen, die in zugehörigen Kolbenbohrungen aufgenommen sind, wobei jeder Kolbenbohrung zwei Schmiermittelauslässe zugeordnet sind und der Dosierkolben in der Kolbenbohrung verschiebbar ist und dazu ausgelegt ist, alternierend die zugemessene Schmiermittelmenge an den einen oder den anderen Schmiermittelauslass abzugeben. Weiterhin stehen die Kolbenbohrungen fluidisch mit der Schmiermitteleinlassbohrung in Verbindung, und die Kolbenbohrungen sind untereinander über Verbindungsbohrungen fluidisch miteinander verbunden, um Schmiermittel an die anderen Kolbenbohrungen weiterzuleiten. Ferner kann jeder Dosierkolben mit der Kolbenbohrung zwei Ringräume definieren, die als Arbeitsräume für das Schmiermittel ausgelegt sind.

Um den Gehäuseblock kompakten gestalten zu können und insbesondere die Einbauhöhe des Progressivverteilers zu reduzieren, ist die Kolbenbohrung als eine sich durch das Gehäuse erstreckende Durchgangsbohrung mit zumindest zwei Bereichen ausgebildet, wobei der erste Bereich dazu ausgelegt ist, den Dosierkolben aufzunehmen, und der zweite Bereich als Schmiermitteauslass ausgebildet ist. Dadurch liegen die Kolbenbohrung und der Schmiermittelauslass in einer Ebene anstatt in unterschiedlichen Ebenen übereinander.

Bevorzugt hat der zweite Bereich einen größeren Durchmesser als der erste Bereich. Ferner kann der erste Bereich in der axialen Richtung der Kolbenbohrung mittig vorgesehen sein und der zweite Bereich kann im Bereich einer Gehäuseblockaußenseite vorgesehen sein. Dies ermöglicht, den ersten Bereich in seinen Abmessungen an den Dosierkolben anzupassen, und den zweiten Bereich in seinen Abmessungen so anzupassen, dass ein Anschluss für eine Schmiermittelleitung anschließbar ist.

Vorteilhafterweise können die Kolbenbohrung und der Schmiermittelauslass konzentrisch zueinander angeordnet sein. Dadurch kann die Bohrung, die den Schmiermittelauslass und die Kolbenbohrung bildet, besonderes platzsparend bereitgestellt werden. Ferner kann ein Fertigungsaufwand für den Progressivverteiler reduziert werden, da nur eine Bohrung anstelle von zwei Bohrungen nötig sind, um einen Schmiermittelauslass und eine Kolbenbohrung zu fertigen. Zudem kann dadurch auch die Fertigung zum einen schneller und zum anderen kostengünstiger erfolgen.

Gemäß einer bevorzugten Ausführungsform ist die Kolbenbohrung auf zumindest einer Seite als Stufenbohrung ausgebildet, wobei der erste Bereich einen ersten Durchmesser und der zweite Bereich einen zweiten Durchmesser hat. Dadurch können die zumindest zwei Bereiche der Kolbenbohrung mit nur einem Bohrvorgang gebildet werden.

Bevorzugt ist jeder Dosierkolben derart ausgebildet, dass jeder Kolbenbohrung zwei Schmiermittelabgänge zugeordnet sind, die jeweils über eine zugehörige Bypass-Bohrung mit dem zugehörigen Schmiermittelauslass verbunden sind. Dadurch kann das zugemessene Schmiermittel von der Kolbenbohrung zum Schmiermittelauslass geführt werden.

Gemäß einer weiteren bevorzugten Ausführungsform ist im Schmiermittelabgang eine Entlüftungsvorrichtung vorgesehen. Vorzugsweise kann die Entlüftungsvorrichtung im Schmiermittelgang zwischen der Kolbenbohrung, insbesondere dem Ringraum, und der Gehäuseaußenseite angeordnet sein. Dies ermöglicht Luft zuverlässig aus dem Progressivverteiler zu entfernen, wodurch eine einwandfreie Funktion und hohe Verteilgenauigkeit sicherstellt werden kann. Da der Schmiermittelabgang aus der Kolbenbohrung direkt mit dem Arbeitsraum in Verbindung steht, kann die Entlüftungsvorrichtung nahe am Dosierkolben platziert werden, wodurch direkt am Dosierkolben entlüftet werden kann. Dies ermöglicht auch, die Entlüftungszeit zu reduzieren. Bevorzugt ist die Entlüftungsvorrichtung als ein Rückschlagventil ausgebildet ist. Alternativ oder zusätzlich kann die Entlüftungsvorrichtung ein lösbar mit dem Gehäuse verbindbares, aber fluiddicht abschließendes Element sein, dass zum Entlüften, beispielsweise manuell, gelöst werden kann.

Gemäß noch einer bevorzugten Ausführungsform ist in die Kolbenbohrung ein lösbar mit dem Gehäuse verbindbarer Einsatz einsetzbar, der fluiddicht den ersten Bereich der Kolbenbohrung abschließt, wobei der Einsatz gleichzeitig als Schmiermittelauslass ausgebildet ist. Bevorzugt ist die als Stufenbohrung ausgebildete Seite der Kolbenbohrung als Aufnahme für den Einsatz ausgebildet. Weiterhin kann der Einsatz beispielsweise gleichzeitig als Kolbenbohrungsverschluss und Schmiermittelauslassverbindung fungieren. Beispielsweise kann der Einsatz mit einem Gewinde versehen sein, dass mit einem Gewinde im Gehäuseblock oder der Kolbenbohrung zusammenwirkt.

Gemäß einem weiteren Ausführungsbeispiel kann ein O-Ring zum Abdichten am Einsatz vorgesehen sein, der mit dem Einsatz und dem ersten Bereich der Kolbenbohrung zusammenwirkt, um den ersten Bereich fluiddicht abzudichten. Der Einsatz ermöglicht, den Montageaufwand zu reduzieren, da ein einziger Einsatz als Schmiermittelauslass und Kolbenbohrungsabschluss fungieren kann, womit die Anzahl der nötigen Verschlüsse halbiert wird. Vorteilhafterweise kann der Einsatz eine Verbindungsstruktur, wie beispielsweise eine Steckverbindung, eine Schnappverbindung und/oder eine Verschraubung, z.B. eine Schneidringverschraubung, aufweisen, über die eine Schmiermittelleitung an den Einsatz angeschlossen werden kann.

Um den Platzbedarf zum Wechseln des Einsatzes zu reduzieren, kann der Einsatz einen Innensechskant aufweisen. Durch den Innensechskant des Einsatzes ist es möglich, einen Schmiermittelauslasseinsatz zu tauschen, der eng von anderen Auslasseinsätzen umgeben ist, ohne zuerst die umliegenden Einsätze entfernen zu müssen. Dadurch wird der Aufwand beim Tausch eines Schmiermittelauslasseinsatzes reduziert. Bevorzugt kann der Einsatz an sich ein Außengewinde aufweisen, das in ein in der Kolbenbohrung angeordnetes Innengewinde, insbesondere mittels des Innensechskants, einschraubbar ist. Selbstverständlich sind auch andere Verbindungsmöglichkeiten, wie beispielsweise eine Klemmverbindung oder ein Bajonettverschluss, möglich.

Bevorzugt sind zur axialen Verschiebung des Dosierkolbens in der Kolbenbohrung an den Enden der Kolbenbohrung jeweils zwei Dosierräume vorgesehen und der erste Bereich der Kolbenbohrung definiert zusammen mit dem Einsatz den Dosierraum. Des Weiteren kann eine Aushöhlung in dem Einsatz vorgesehen sein. Dadurch kann sichergestellt werden, dass der Dosierkolben ausreichend Raum für seinen Hub hat.

Gemäß einer weiteren bevorzugten Ausführungsform weist die Bypass-Bohrung einen ersten Abschnitt und einen zweiten Abschnitt auf, wobei der erste Abschnitt mit dem Schmiermittelabgang aus der Kolbenbohrung verbunden ist, und der zweite Abschnitt über den Einsatz mit dem Schmiermittelauslass verbunden ist. Beispielsweise kann der erste Abschnitt parallel zu der Kolbenbohrung verlaufen. Die Bypass-Bohrung ermöglicht, das zugemessene Schmiermittel über den Einsatz zum Schmiermittelauslass zu führen. Bevorzugt weist der Einsatz zumindest eine Öffnung auf, die zu dem zweiten Abschnitt der Bypass-Bohrung ausgerichtet ist, so dass das Schmiermittel von dem zweiten Abschnitt in den Einsatz geführt werden kann.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine Schnittansicht entlang einer ersten Achse durch einen Progressivverteiler gemäß einer Ausführungsform; und
- Fig. 2:: eine Schnittansicht entlang einer zu der ersten Achse senkrechten zweiten Achse durch den Progressivverteiler aus Fig. 1;

Im Folgenden werden gleiche oder funktionell gleichwirkende Elemente mit denselben Bezugszeichen gekennzeichnet.

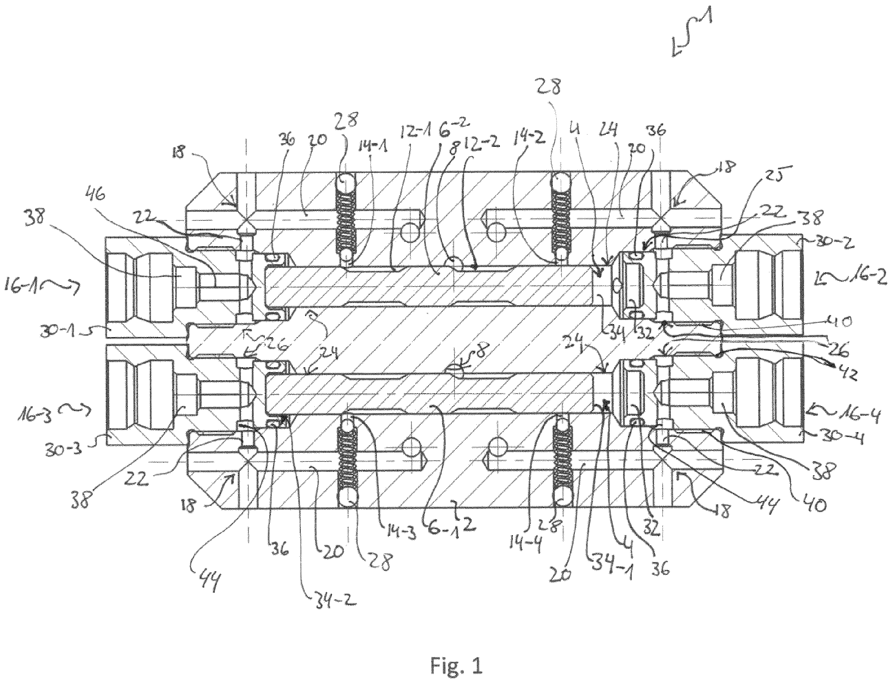

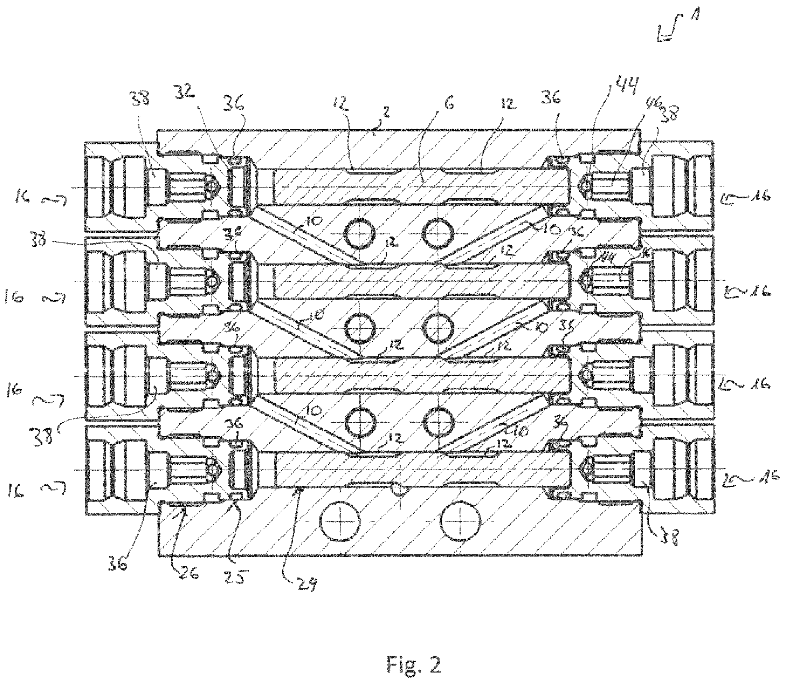

Die Figur 1 zeigt eine perspektivische Ansicht eines Progressivverteilers 1 in Blockbauweise. Der Progressivverteiler 1 weist dazu wie üblich einen Gehäuseblock 2 auf, in den mehrere Bohrungen eingebracht sind. Wie den Schnittansichten von Fig. 1 und 2 zu entnehmen ist, weist der Gehäuseblock 2 mehrere Kolbenbohrungen 4 auf, in denen Dosierkolben 6 aufnehmbar sind. Ein Progressivverteiler 1 basiert darauf, dass die Dosierkolben 6 nacheinander von einer ersten Position in eine zweite Position verschoben werden.

Jeder Dosierkolben 6 ist in der Kolbenbohrung 4 verschiebbar angeordnet. Um das Schmiermittel den einzelnen Kolbenbohrungen 4 zur Verfügung zu stellen, ist eine Schmiermitteleinlassbohrung 8 vorgesehen. Wie genauer in Fig. 2 zu sehen ist, sind die Kolbenbohrungen 4 untereinander über Verbindungsbohrungen 10 verbunden. Über diese Verbindungsbohrungen 10 wird Schmiermittel von einer Kolbenbohrung 4 zur anderen Kolbenbohrung 4 geleitet.

Ferner ist jeder Dosierkolben 6 derart ausgebildet, dass er mit der Kolbenbohrung 4 zwei Ringräume definiert, die als Arbeitsräume 12 für das Schmiermittel ausgelegt sind, und zwischen jedem seiner axialen Enden und der Innenfläche der Kolbenbohrung 4 jeweils einen Dosierraum 34 definiert. Wie in Fig. 1 gesehen werden kann, ist jeder Arbeitsraum 12 mit einem Schmiermittelabgang 14 versehen, der durch die alternierende Bewegung des Dosierkolbens 6 freigeben wird.

Um den Gehäuseblock 2 kompakter gestalten zu können und insbesondere die Einbauhöhe des Progressivverteilers 1 zu reduzieren, ist die Kolbenbohrung 4 als eine sich durch das Gehäuse erstreckende Durchgangsbohrung mit zumindest zwei Bereichen 24, 26 ausgebildet, wobei der erste Bereich 24 dazu ausgelegt ist, den Dosierkolben 4 aufzunehmen, und der zweite Bereich als Schmiermittelauslass 16 ausgebildet ist. Dabei hat der zweite Bereich 26 einen größeren Durchmesser als der erste Bereich 24, wobei der erste Bereich 24 und der zweite Bereich 26, d.h. die Kolbenbohrung 4 und der Schmiermittelauslass 16, konzentrisch zueinander angeordnet sind.

Damit das Schmiermittel vom Schmiermittelabgang 14 zum Schmiermittelauslass geführt werden kann, ist jedem Schmiermittelabgang 14 eine Bypass-Bohrung 18 zugeordnet. Die Bypass-Bohrung 18 umfasst einen ersten Abschnitt 20 und einen zweiten Abschnitt 22. Der erste Abschnitt 20 verläuft dabei parallel zur Kolbenbohrung 14 und ist mit dem Schmiermittelabgang 14 verbunden. Der zweite Abschnitt 22 verbindet den ersten Abschnitt 20 mit einem Schmiermittelauslass 16, so dass die Bypass-Bohrung 18 ermöglicht, das zugemessene Schmiermittel vom Schmiermittelabgang 14 zum Schmiermittelauslass 16 zu führen.

Das Schmiermittel fließt über die Schmiermitteleinlassbohrung 8 zu einem Dosierraum 34-1 des ersten Dosierkolbens 6-1. Dadurch wird der Dosierkolben 6-1 verschoben und das Schmiermittel, das sich in dem anderen Dosierraum 34-2 des Dosierkolben 6-1 befindet, wird aus dem Dosierraum 34-2 herausgedrückt und fließt über die an dem Dosierraum 34-2 angeordnete Verbindungsleitung 10 (Fig. 2) zum Arbeitsraum 12 des nächsten Dosierkolbens 6 und von da über den Schmiermittelabgang 14 und die Bypass-Bohrung 18 zum Schmiermittelauslass 16.

Insbesondere können, wie in Fig. 1 gesehen werden kann, der Schmiermittelabgang 14 sowie der erste und zweite Abschnitt 20, 22 der Bypass-Bohrung 18 als Bohrungen von außen in den Gehäuseblock 2 eingebracht werden. Um die Bohrkanäle dann zu verschließen können beispielsweise fluiddicht abschließende Verschlusskappen (nicht dargestellt), wie beispielsweise eine Verkugelung oder Verstopfung, vorgesehen sein, die die Bohrkanäle nach außen hin fluiddicht abschließen.

Weiterhin ist in dem dargestellten Ausführungsbeispiel die Kolbenbohrung 4 als Stufenbohrung ausgebildet, wobei der erste Bereich 24 durch eine erste Stufe und der zweite Bereich 26 durch eine zweite Stufe gebildet ist. Zwischen der ersten und der zweiten Stufe ist eine dritte Stufe gebildet, die als Übergangsbereich 25 mit einem dritten Durchmesser zwischen dem ersten Bereich 24 und dem zweiten Bereich 26 dient, wobei der dritte Durchmesser größer ist als der erste Durchmesser und kleiner ist als der zweite Durchmesser. Aus Fertigungsgründen können die Übergänge zwischen den verschiedenen Stufen schräg verlaufen.

In die Kolbenbohrung ist ein lösbar mit dem Gehäuseblock 2 verbindbarer Einsatz 30 einsetzbar, der fluiddicht den ersten Bereich 24 der Kolbenbohrung 4 abschließt, wobei der Einsatz 30 gleichzeitig als Schmiermittelauslass 16 ausgebildet ist. Beispielsweise kann der Einsatz eine axiale Bohrung 46 aufweisen, aus der das Schmiermittel austreten kann. Dabei ist die Stufenbohrung der Kolbenbohrung 4 als Aufnahme für den Einsatz 30 ausgebildet. Der Einsatz 30 kann beispielsweise gleichzeitig als Kolbenbohrungsverschluss und Schmiermittelauslassverbindung fungieren. Weiterhin weist der Einsatz 30 in dem dargestellten Ausführungsbeispiel eine Aushöhlung 32 auf, die zusammen mit der Kolbenbohrung 4 einen Dosierraum 34 definiert, so dass sichergestellt wird, dass der Dosierkolben 6 ausreichend Raum für seinen Hub hat. Ferner ist ein O-Ring 36 zum Abdichten am Einsatz 30 vorgesehen, der mit dem Übergangsbereich 25 der Kolbenbohrung 4 zusammenwirkt, um den ersten Bereich 24 und insbesondere den Dosierraum 34 fluiddicht abzudichten. Dabei ist es wichtig, dass der Übergangsbereichsbereich 25 einen geringeren Durchmesser hat als der zweite Bereich 26, der dem Innendurchmesser des Gewindes 40 entspricht. Nur so kann ein O-Ring 36 ausgewählt werden, der ohne Beschädigung durch das Gewinde 40 eingesetzt werden kann. Ferner kann die Schräge davor als Einführschräge für den O-Ring 36 dienen. Selbstverständlich sind auch andere Abdichtungen möglich.

Bei der gezeigten Ausführungsform ist der Einsatz 30 an seiner Außenseite mit einem Gewinde versehen, das in ein an dem zweiten Bereich 26 der Kolbenbohrung angeordnetes Gewinde 40 eingreift. Alternativ oder zusätzlich kann der Einsatz 30 auch dazu ausgelegt sein, mit einem anderen lösbaren Befestigungsverfahren in dem zweiten Bereich 26 gesichert zu werden. Der Einsatz 30 ermöglicht den Montageaufwand zu reduzieren, da ein einziger Einsatz 30 als Schmiermittelauslass 16 und Kolbenbohrungsverschluss dient, womit die Anzahl der nötigen Verschlüsse halbiert wird. Ferner ist eine Dichtkante 42 vorgesehen, die an der Außenseite angeordnet ist und dazu eingerichtet ist, mit dem Einsatz 30 zusammenzuwirken, um den Einsatz 30 gegen den Gehäuseblock 2 abzudichten.

Um den Platzbedarf zum Wechseln des Einsatzes 30 zu reduzieren, weist der Einsatz einen Innensechskant 38 auf, mit dem der Einsatz 30 in das Gewinde 40 des zweiten Bereichs 26 geschraubt werden kann. Durch den Innensechskant 38 des Einsatzes 30 ist es möglich, einen Einsatz 30 zu tauschen, der dicht von anderen Auslasseinsätzen umgeben ist, ohne zuerst die umliegenden Einsätze entfernen zu müssen. Dadurch wird der Aufwand beim Tausch eines Schmiermittelauslasseinsatz reduziert.

Der Einsatz 30 ist vorzugsweise derart ausgebildet, dass eine Schmiermittelleitung (nicht gezeigt) mit ihm verbindbar ist. Beispielsweise kann die Schmiermittelleitung über eine lösbare Verbindung, wie beispielsweise einen Schnappverschluß, einen Einrastverschluss, oder eine Schneidringverschraubung, an dem Einsatz befestigt sein. Der Einsatz 30 weist ferner eine als Ringraum ausgebildete Öffnung 44 auf, die mit dem zweiten Abschnitt 22 der Bypass-Bohrung 18 zusammenwirkt, so dass das Schmiermittel von der Bypass-Bohrung 18 durch die radiale Bohrung 46 des Einsatz 30 zum Schmiermittelauslass 16 geführt werden kann.

Wie weiterhin in Fig. 1 gezeigt, ist in dem Schmiermittelabgang 14 zwischen dem Ringraum 1 und der Gehäuseaußenseite ein als Entlüftungsvorrichtung ausgebildetes Rückschlagventil 28 vorgesehen. Das Rückschlagventil 28 ermöglicht Luft aus dem Progressivverteiler 1 zu entfernen, wodurch eine einwandfreie Funktion und hohe Verteilgenauigkeit sicherstellt werden kann. Da der Schmiermittelabgang 14 direkt mit dem Arbeitsraum 12 in Verbindung steht, kann das Rückschlagventil 28 nahe am Dosierkolben 6 platziert werden, wodurch nahe am Dosierkolben 6 entlüftet werden kann, was die Entlüftungszeit reduziert. Alternativ oder zusätzlich zu dem Rückschlagventil 28 kann auch ein lösbar mit dem Gehäuse 2 verbindbares, aber fluiddicht abschließendes Element, beispielsweise eine Schraube, vorgesehen sein, das zum Entlüften, beispielsweise manuell, gelöst werden kann.

Insgesamt besteht mit dem vorgestellten Progressivverteiler 1 die Möglichkeit, den Gehäuseblock kompakter und insbesondere eine Einbauhöhe niedriger zu gestalten. Ferner kann durch die zusammenfallende Anordnung von Kolbenbohrung 4 und Bohrung für den Schmiermittelauslass 16 der Fertigungsaufwand reduziert werden. Durch die Verwendung von Innensechskantverschraubungen 38 zur Befestigung des Schmiermittelauslasseinsatzes 30 wird zusätzlich ermöglicht, einen Einsatz zu tauschen, ohne dass die benachbarten Einsätze dafür gelöst werden müssen.

### Bezugszeichenliste

- 1: Progressivverteiler
- 2: Gehäuseblock
- 4: Kolbenbohrung
- 6: Dosierkolben
- 10: Verbindungsbohrung
- 12: Arbeitsraum
- 14: Schmiermittelabgang
- 16: Schmiermittelauslass
- 18: Bypass-Bohrung
- 20: erster Abschnitt
- 22: zweiter Abschnitt
- 24: erster Bereich
- 25: Übergangsbereich
- 26: zweiter Bereich
- 30: Einsatz
- 32: Aushöhlung
- 34: Dosierraum
- 36: O-Ring
- 38: Verschraubung
- 40: Gewinde
- 42: Dichtkante
- 44: Öffnung
- 46: axiale Bohrung

## Patentansprüche

1. Progressivverteiler (1) für Schmiermittel mit einem Gehäuseblock (2), wobei der Gehäuseblock (2) eine Schmiermitteleinlassbohrung über die Schmiermittel in den Progressivverteiler (1) einbringbar ist und mehrere Schmiermittelauslässe (16) aufweist, über die jeweils eine zugemessene Schmiermittelmenge an einen mit dem jeweiligen Schmiermittelauslass (16) verbundenen Verbraucher abgebbar ist, wobei zum Abgeben der zugemessenen Schmiermittelmenge in dem Gehäuseblock (2) mehrere Dosierkolben (6) vorgesehen sind, die in zugehörigen Kolbenbohrungen (4) aufgenommen sind, wobei jeder Kolbenbohrung (4) zwei Schmiermittelauslässe (16) zugeordnet sind und der Dosierkolben (6) in der Kolbenbohrung (4) verschiebbar ist und dazu ausgelegt ist, alternierend die zugemessene Schmiermittelmenge an den einen oder den anderen Schmiermittelauslass (16) abzugeben, wobei weiterhin die Kolbenbohrungen (4) fluidisch mit der Schmiermitteleinlassbohrung in Verbindung stehen, und die Kolbenbohrungen (4) untereinander über Verbindungsbohrungen (10) fluidisch miteinander verbunden sind, um Schmiermittel an die anderen Kolbenbohrungen (4) weiterzuleiten,
**dadurch gekennzeichnet, dass**
jede Kolbenbohrung (4) eine sich durch den Gehäuseblock (2) erstreckende Durchgangsbohrung mit zumindest zwei Bereichen (24, 26) ist, wobei der erste Bereich (24) dazu ausgelegt ist, den Dosierkolben (6) aufzunehmen, und der zweite Bereich (26) als Schmiermitteauslass (16) ausgebildet ist.

2. Progressivverteiler gemäß Anspruch 1, wobei die Kolbenbohrung (4) und der Schmiermittelauslass (16) konzentrisch zueinander angeordnet sind.

3. Progressivverteiler gemäß Anspruch 1 oder 2, wobei die Kolbenbohrung (4) auf zumindest einer Seite als Stufenbohrung ausgebildet ist, wobei der erste Bereich (24) einen ersten Durchmesser hat und der zweite Bereich (26) einen zweiten Durchmesser hat.

4. Progressivverteiler gemäß einem der vorherigen Ansprüche, wobei jeder Kolbenbohrung (4) zwei Schmiermittelabgänge (14) zugeordnet sind, die jeweils über eine zugehörige Bypass-Bohrung (18) mit dem zugehörigen Schmiermittelauslass (16) verbunden sind.

5. Progressivverteiler gemäß Anspruch 4, wobei im Schmiermittelabgang (14) eine Entlüftungsvorrichtung (28) vorgesehen ist.

6. Progressivverteiler gemäß Anspruch 5, wobei die Entlüftungsvorrichtung (28) als ein Rückschlagventil ausgebildet ist.

7. Progressivverteiler gemäß einem der vorherigen Ansprüche, wobei in die Kolbenbohrung (4) ein lösbar mit dem Gehäuseblock (2) verbindbarer Einsatz (30) einsetzbar ist, der fluiddicht den ersten Bereich (24) der Kolbenbohrung (4) abschließt, wobei der Einsatz (30) gleichzeitig als Schmiermittelauslass (16) ausgebildet ist.

8. Progressivverteiler gemäß Anspruch 7, wobei zur axialen Verschiebung des Dosierkolbens (6) in der Kolbenbohrung (4) an den Enden der Kolbenbohrung (4) jeweils zwei Dosierräume (34) vorgesehen sind und der erste Bereich (24) der Kolbenbohrung (4) zusammen mit dem Einsatz (30) den Dosierraum (34) definiert.

9. Progressivverteiler gemäß Anspruch 7 oder 8 abhängig von Anspruch 4, wobei die Bypass-Bohrung (18) einen ersten Abschnitt (20) und einen zweiten Abschnitt (22) aufweist, wobei der erste Abschnitt (20) mit der Schmiermittelabgang (14) verbunden ist, und der zweite Abschnitt (22) über den Einsatz (30) mit dem Schmiermittelauslass (16) verbunden ist.

10. Progressivverteiler gemäß einem der Ansprüche 7 bis 9, wobei der Einsatz (30) eine Innensechskantverschraubung (38) aufweist.

## Claims

1. Progressive distributor (1) for lubricant, having a housing block (2), wherein the housing block (2) has a lubricant inlet bore, via which lubricant can be introduced into the progressive distributor (1), and has a plurality of lubricant outlets (16), via which in each case a metered lubricant quantity can be discharged to a consumer connected to the respective lubricant outlet (16), wherein, for dispensing the metered lubricant quantity in the housing block (2), a plurality of metering pistons (6) are provided, which are received in associated piston bores (4), wherein two lubricant outlets (16) are assigned to each piston bore (4), and the metering piston (6) is displaceable in the piston bore (4) and is designed to alternately discharge the metered lubricant quantity to the one or the other lubricant outlet (16), wherein, furthermore, the piston bores (4) are fluidically connected to the lubricant inlet bore, and the piston bores (4) are fluidically connected to one another via connecting bores (10) in order to forward lubricant to the other piston bores (4), **characterized in that**
each piston bore (4) is a through bore extending through the housing block (2) and having at least two regions (24, 26), wherein the first region (24) is designed to receive the metering piston (6), and the second region (26) is designed as a lubricant outlet (16).

2. Progressive distributor according to Claim 1, wherein the piston bore (4) and the lubricant outlet (16) are arranged concentrically with respect to one another.

3. Progressive distributor according to Claim 1 or 2, wherein the piston bore (4) is formed on at least one side as a stepped bore, wherein the first region (24) has a first diameter and the second region (26) has a second diameter.

4. Progressive distributor according to one of the preceding claims, wherein each piston bore (4) is assigned two lubricant exits (14) which are each connected to the associated lubricant outlet (16) via an associated bypass bore (18).

5. Progressive distributor according to Claim 4, wherein a ventilation device (28) is provided in the lubricant exit (14).

6. Progressive distributor according to Claim 5, wherein the ventilation device (28) is configured as a check valve.

7. Progressive distributor according to one of the preceding claims, wherein an insert (30) which can be releasably connected to the housing block (2) and which closes off the first region (24) of the piston bore (4) in a fluid-tight manner can be inserted into the piston bore (4), wherein the insert (30) is configured at the same time as a lubricant outlet (16).

8. Progressive distributor according to Claim 7, wherein, for the axial displacement of the metering piston (6) in the piston bore (4), in each case two metering chambers (34) are provided at the ends of the piston bore (4), and the first region (24) of the piston bore (4) together with the insert (30) defines the metering chamber (34).

9. Progressive distributor according to Claim 7 or 8 dependent on Claim 4, wherein the bypass bore (18) has a first portion (20) and a second portion (22), wherein the first portion (20) is connected to the lubricant exit (14), and the second portion (22) is connected to the lubricant outlet (16) via the insert (30).

10. Progressive distributor according to one of Claims 7 to 9, wherein the insert (30) has a hexagon socket screw connection (38).

## Revendications

1. Distributeur progressif (1) pour lubrifiant, avec un bloc de boîtier (2), le bloc de boîtier (2) présentant un alésage d'entrée de lubrifiant par l'intermédiaire duquel du lubrifiant peut être introduit dans le distributeur progressif (1) et plusieurs sorties de lubrifiant (16) par l'intermédiaire desquelles une quantité dosée de lubrifiant peut être délivrée respectivement à un consommateur relié à la sortie de lubrifiant (16) respective, plusieurs pistons de dosage (6) étant prévus dans le bloc de boîtier (2) pour délivrer la quantité dosée de lubrifiant, lesquels sont logés dans des alésages de piston (4) correspondants, chaque alésage de piston (4) étant associé à deux sorties de lubrifiant (16) et le piston de dosage (6) pouvant coulisser dans l'alésage de piston (4) et étant conçu pour délivrer en alternance la quantité dosée de lubrifiant à l'une ou l'autre sortie de lubrifiant (16), les alésages de piston (4) étant en outre reliés fluidiquement à l'alésage d'entrée de lubrifiant, et les alésages de piston (4) étant reliés fluidiquement entre eux par l'intermédiaire d'alésages de liaison (10) afin de transférer du lubrifiant vers les autres alésages de piston (4), **caractérisé en ce que**
chaque alésage de piston (4) est un alésage traversant s'étendant à travers le bloc de boîtier (2) avec au moins deux zones (24, 26), la première zone (24) étant conçue pour loger le piston de dosage (6) et la deuxième zone (26) étant réalisée sous forme de sortie de lubrifiant (16).

2. Distributeur progressif selon la revendication 1, dans lequel l'alésage du piston (4) et la sortie de lubrifiant (16) sont agencés de manière concentrique l'un par rapport à l'autre.

3. Distributeur progressif selon la revendication 1 ou 2, dans lequel l'alésage du piston (4) est réalisé sous forme d'alésage étagé sur au moins un côté, la première zone (24) ayant un premier diamètre et la deuxième zone (26) ayant un deuxième diamètre.

4. Distributeur progressif selon l'une quelconque des revendications précédentes, dans lequel deux évacuations de lubrifiant (14) sont associées à chaque alésage de piston (4), lesquelles sont chacune reliées à la sortie de lubrifiant correspondante (16) par l'intermédiaire d'un alésage de dérivation correspondant (18).

5. Distributeur progressif selon la revendication 4, dans lequel un dispositif de purge d'air (28) est prévu dans l'évacuation de lubrifiant (14).

6. Distributeur progressif selon la revendication 5, dans lequel le dispositif de purge d'air (28) est réalisé sous la forme d'un clapet anti-retour.

7. Distributeur progressif selon l'une quelconque des revendications précédentes, dans lequel un insert (30) pouvant être relié de manière amovible au bloc de boîtier (2) peut être inséré dans l'alésage de piston (4), lequel ferme de manière étanche aux fluides la première zone (24) de l'alésage de piston (4), l'insert (30) étant en même temps réalisé sous forme de sortie de lubrifiant (16).

8. Distributeur progressif selon la revendication 7, dans lequel, pour le coulissement axial du piston de dosage (6) dans l'alésage du piston (4), deux chambres de dosage (34) sont prévues respectivement extrémités de l'alésage de piston (4) et la première zone (24) de l'alésage de piston (4) définit la chambre de dosage (34) conjointement avec l'insert (30).

9. Distributeur progressif selon la revendication 7 ou 8, dépendant de la revendication 4, dans lequel l'alésage de dérivation (18) présente une première section (20) et une deuxième section (22), la première section (20) étant reliée à l'évacuation de lubrifiant (14) et la deuxième section (22) étant reliée à la sortie de lubrifiant (16) par l'intermédiaire de l'insert (30).

10. Distributeur progressif selon l'une quelconque des revendications 7 à 9, dans lequel l'insert (30) présente un raccord vissé à six pans creux (38).
